(19) Europäisches Patentamt
European Patent Office
Office européen des brevets

(11) EP 3 448 906 B1

# (12) EUROPÄISCHE PATENTSCHRIFT

(45) Veröffentlichungstag und Bekanntmachung des Hinweises auf die Patenterteilung:
**05.08.2020 Patentblatt 2020/32**

(21) Anmeldenummer: **17718065.0**

(22) Anmeldetag: **18.04.2017**

(51) Int Cl.:
***C08G 59/40*** (2006.01) ***C09J 163/00*** (2006.01)

(86) Internationale Anmeldenummer:
**PCT/EP2017/059154**

(87) Internationale Veröffentlichungsnummer:
**WO 2017/186528 (02.11.2017 Gazette 2017/44)**

## (54) REPOSITIONIERBARES FEUCHTIGKEITSHÄRTENDES KLEBEBAND

REPOSITIONABLE, MOISTURE-CURING ADHESIVE TAPE

RUBAN ADHÉSIF REPOSITIONNABLE DURCISSANT À L'HUMIDITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2016 DE 102016207075**

(43) Veröffentlichungstag der Anmeldung:
**06.03.2019 Patentblatt 2019/10**

(73) Patentinhaber: **tesa SE**
**22848 Norderstedt (DE)**

(72) Erfinder:
- **SCHUH, Christian**
  **22767 Hamburg (DE)**
- **KIRPICENOK, Olga**
  **25474 Ellebek (DE)**
- **QUERDEL, Yvonne**
  **22926 Ahrensburg (DE)**

(56) Entgegenhaltungen:
**JP-A- H09 328 668** **US-A- 4 376 844**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 448 906 B1

## Beschreibung

Die vorliegende Erfindung betrifft ein haftklebriges Klebeband, enthaltend oder bestehend aus einer feuchtigkeitshärtenden Zusammensetzung enthaltend oder bestehend aus:

A 5 bis 60 Gew.-Teile wenigstens einer Filmbildner-Komponente;
B 40 bis 95 Gew.-Teile wenigstens einer Epoxid-Komponente;
C 10 bis 500 Gew.-Teile wenigstens eines feuchtigkeitsaktivierbaren Härters;
D optional 0,1 bis 15 Gew.-Teile wenigstens eines Stabilisators, sowie
E optional 0,1 bis 200 Gew.-Teile wenigstens eines Zusatzstoffs,

jeweils bezogen auf die feuchtigkeitshärtende Zusammensetzung, wobei sich die Gew.-Teile der Komponente A und B zu 100 ergänzen. Die Erfindung betrifft ferner ein Verfahren zum Zusammenfügen von zwei Bauteilen mittels eines solchen Klebebandes.

## Stand der Technik

Zum strukturellen Verkleben von Bauteilen (beispielsweise im Automobilbau) werden zu einem großen Anteil Flüssigklebstoffe auf Epoxidbasis eingesetzt. Diese werden über komplex gesteuerte Dosiermaschinen aufgetragen und verfügen über keine initiale Verklebungsfestigkeit, sodass die Bauteile über den Aushärtungszeitraum in Position gehalten werden müssen.

Um diesen Nachteil zu überwinden ist es bekannt, Klebebänder einzusetzen, die über eine Anfangsklebrigkeit verfügen, die die zu verklebenden Bauteile unmittelbar nach der Verklebung in Position halten. Diese Klebebänder werden dann einem Härtungsprozess unterzogen, in welchem sie ihre finale Klebkraft entwickeln. Die Aushärtung wird über einen externen Auslöser wie beispielsweise UV-Licht oder hohe Temperaturen gestartet. Solche Aushärtungsprozesse sind nach dem Start nicht mehr reversibel oder verzögerbar, sodass nach dem Fügen keine Korrekturen der Position des Bauteils mehr möglich ist.

Aus US4376844 ist ein Epoxidflüssigklebstoff bekannt, der in Kartuschen lagerfähig ist und zu feuchtigkeitshärtenden Filmen ausgegossen werden kann. Als Härter werden Polyoxazolidine verwendet. In diesem Dokument ist beschrieben, dass diese feuchtehärtenden Systeme sofort aushärten, wenn sie an Luft zu einem Film gegossen werden. Folglich können keine lagerfähigen Klebebänder hergestellt werden, die auf dieser Chemie basieren.

In JP2014214265A werden feuchtigkeitshärtende Klebebänder beschrieben, wobei die Feuchtehärtungschemie über Silylgruppen realisiert wird. Dabei werden klassischen Flüssigklebstoffzusammensetzungen kohäsionssteigernde Polymere wie Polyurethane oder Acrylate zugegeben. Nachteilig bei der Feuchtevernetzung mit Alkoxysilangruppen ist die Freisetzung von je nach System und Reaktivität giftigem Methanol bzw. Ethanol.

WO2013174776A1 offenbart Cyanoacrylat-Klebebänder, die nach einer einstündigen Erwärmung auf 60°C innerhalb von 24 Stunden bei 23°C aushärten. Die Klebebandzusammensetzung enthält 1 Gew.-% einer Säure als Stabilisator. Solche Klebebänder sind nur gekühlt lagerfähig. So wird die Verklebungsleistung der Klebebänder nach Lagerversuchen bei 5°C geprüft. Bei solchen Cyanoacrylat-Klebstoffen kann es als nachteilig empfunden werden, dass diese in der Regel eine schwache Temperaturperformance zeigen, da im Härtungsschritt kein chemisch vernetztes Polymer aufgebaut wird, sondern lediglich lineare und damit schmelzbare Polymere. Als zweiter Nachteil kann die Empfindlichkeit der Reaktion gegenüber protischen Oberflächen genannt werden, die die Aushärtung ver- oder zumindest behindern können.

## Aufgabe der Erfindung

Die Aufgabe der Erfindung bestand somit darin, ein lagerfähiges feuchtigkeitshärtendes Klebeband der eingangs genannten Art zur Verfügung zu stellen, dessen Aushärtungsmechanismus in der Weise eingestellt ist, dass beim Verkleben zweier Bauteile mit diesem Klebeband nach dem Zusammenfügen noch Positionskorrekturen der Verklebung beziehungsweise der verklebten Bauteile innerhalb einer Zeitspanne von wenigstens 30 Minuten möglich sind. Die Repositionierung der Veklebung sollte vorzugsweise nicht zu einer merklichen Beeinträchtigung der finalen Verklebungsfestigkeit führen im Vergleich zu demselben Klebeband ohne Repositionierung.

## Lösung der Aufgabe

Die Aufgabe wird gelöst durch ein haftklebriges Klebeband, enthaltend oder bestehend aus einer feuchtigkeitshärtenden Zusammensetzung, enthaltend oder bestehend aus:

A 5 bis 60 Gew.-Teile wenigstens einer Filmbildner-Komponente;
B 40 bis 95 Gew.-Teile wenigstens einer Epoxid-Komponente;
C 10 bis 500 Gew.-Teile wenigstens eines feuchtigkeitsaktivierbaren Härters;
D optional 0,1 bis 15 Gew.-Teile wenigstens eines Stabilisators, sowie
E optional 0,1 bis 200 Gew.-Teile wenigstens eines Zusatzstoffs,

jeweils bezogen auf die feuchtigkeitshärtende Zusammensetzung, wobei sich die Gew.-Teile der Komponente A und B zu 100 ergänzen,
wobei die feuchtigkeitshärtende Zusammensetzung dadurch gekennzeichnet ist, dass der feuchtigkeitsaktivierbare Härter C zumindest ein geblocktes Amin umfasst oder daraus besteht.

Der Erfindung liegt die Erkenntnis zugrunde, dass durch Einsatz geblockter Amine als feuchtigkeitsaktivierbarer Härter C der Aushärtungsmechanismus einer Epoxid-basierten Zusammensetzung der vorgenannten Art in der Weise verlangsamt werden kann, dass bei der Verwendung des Klebebandes ein Lösen und Wiederverkleben des Klebebandes innerhalb einer Zeitspanne von wenigstens 30 Minuten möglich ist, insbesondere sogar innerhalb einer Zeitspanne von 30 Minuten bis zu 12 Stunden, bevorzugt innerhalb einer Zeitspanne von 30 Minuten bis zu 24 Stunden. Eine Repositionierung der Verklebung innerhalb der vorgenannten Zeitspannen führt dabei vorzugsweise nicht zu einer merklichen Beeinträchtigung der finalen Verklebungsfestigkeit im Vergleich zu demselben Klebeband ohne Repositionierung.

Überraschend wurde also gefunden, dass trotz der Vorbehalte aus dem Stand der Technik (z.B. US4376844) lagerfähige haftklebrige Filme aus feuchtehärtbaren Epoxidklebstoffen bereitgestellt werden können, die sogar trotz der Gegenwart von Luftfeuchtigkeit repositionierbar sind.

Als "haftklebrig" beziehungsweise als "Haft"-klebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Im Sinne der vorliegenden Erfindung besitzt ein haftklebriges Klebeband eine Klebkraft im unausgehärteten Zustand von wenigstens 1 N/cm. Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 $\mu$m verwendet, wie sie von der Firma Coveme (Italien) erhältlich ist. Die Verklebung eines 2cm breiten Messtreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergab sich als Mittelwert aus drei Einzelmessungen.

Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften.

## Detaillierte Beschreibung der Erfindung

Das erfindungsgemäße (Haft-)Klebeband kann bevorzugt trägerlos oder auch mit wenigstens einem Trägermaterial ausgestaltet sein. Ist ein Trägermaterial vorhanden, kann dieses ein- oder vorzugsweise beidseitig mit einer (Haft)klebemasse versehen sein, die die erfindungsgemäße feuchtigkeitshärtende Zusammensetzung enthält oder daraus besteht. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-) elektronischen Anordnung), Mehrschichtanordnungen und dergleichen. Dabei sind für verschiedene Anwendungen unterschiedlichste Träger wie zum Beispiel Folien, Gewebe, Vliese und Papiere mit den Klebemassen kombinierbar.

Als Trägermaterial können alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer (opto-)elektronischen Anordnung), Mehrschichtanordnungen und dergleichen verwendet werden. Dabei sind für verschiedene Anwendungen unterschiedlichste Träger wie zum Beispiel Folien, Gewebe, Vliese und Papiere mit verschiedenen Klebstoffen kombinierbar.

Als Trägermaterial eines Klebebandes werden vorliegend bevorzugt Polymerfolien, Folienverbunde oder mit organischen und/oder anorganischen Schichten versehene Folien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien: Polyethylen, Polypropylen - insbesondere das durch mono- oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Der Träger kann zudem mit organischen oder anorganischen Beschichtungen oder Schichten kombiniert sein. Dies kann durch übliche Verfahren wie zum Beispiel Lackieren, Drucken, Bedampfen, Sputtern, Co-Extrusion oder Lamination geschehen. Beispielhaft, aber nicht einschränkend erwähnt seien hier etwa Oxide oder Nitride des Siliziums und des Aluminiums, Indium-Zinn-Oxid (ITO) oder Sol-Gel-Beschichtungen.

Des Weiteren umfasst der Ausdruck "Klebeband" auch so genannte "Transferklebebänder", das heißt ein Klebeband ohne Träger. Bei einem Transferklebeband ist die Klebemasse, die hier dem Klebeband entspricht, vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse/ das Klebeband appliziert und dann der zweite Liner entfernt. Die Klebemasse kann so direkt zur Verbindung zweier Oberflächen verwendet werden. Derartige trägerlose Transferklebebänder sind erfindungsgemäß besonders bevorzugt. Mit einem solchen erfindungsgemäßen haftklebrigen trägerlosen Transferklebeband wird eine in Positionierung und Dosierung sehr genaue Verklebung ermöglicht.

Haftklebebänder, die ein-oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebemassen (Transferklebeband) und Klebebandabschnitten (z.B. Etiketten) eingesetzt.

Diese Liner sorgen des Weiteren dafür, dass die Klebemasse vor der Anwendung nicht verschmutzt wird. Ein Liner ist nicht Bestandteil eines Klebebandes, sondern nur ein Hilfsmittel zu dessen Herstellung, Lagerung oder für die Weiterverarbeitung. Ebenso ist der Verbund nur temporär und nicht dauerhaft.

Ein Liner nach dem Stand der Technik besteht aus zumindest einer abhäsiven Schicht, auch als "Trennschicht" bezeichnet, um die Adhäsionsneigung von adhärierenden Produkten gegenüber diesen Oberflächen zu verringern (trennwirksame Funktion). Diese Schicht kann auf einem Trägermaterial aufgebracht sein.

Als Trägermaterial des Liners können insbesondere Papiere oder Folien eingesetzt werden. Als Folien werden dabei bevorzugt solche aus biaxial verstrecktem Polyethylenterephthalat, Polybuten, Polypropylen, Polyethylen, monoaxial verstrecktem Polypropylen, biaxial verstrecktem Polypropylen oder Polyethylen verwendet, besonders vorzugsweise Polyolefinfolien (Polypropylen- und Polyethylenfolien) oder Polyesterfolien. Auch polymerbeschichtete Papiere oder Vliese sind anzutreffen.

Als Trennschicht eingesetzt werden können alle dem Fachmann bekannten Systeme, insbesondere solche, welche im "Handbook of Pressure Sensitive Adhesive Technology" von Donatas Satas (Satas & Associates, Warwick 1999) genannt sind. Das Material der abhäsiven Trennschicht ist nach dem Stand der Technik bevorzugt ausgewählt aus der Gruppe umfassend Silikone, fluorierte Silikone, Silikon-Copolymere, Wachse, Carbamate, Fluorpolymere und Polyolefine oder Mischungen aus zwei oder mehr der genannten Stoffe.

Als Trennschicht werden häufig vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen, wie Dibutylzinndiacetat, in der Masse zugegen.

Silikonbasierende Trennbeschichtungen auf additionsvernetzender Basis lassen sich durch Hydrosilylierung härten. Diese Trennsysteme umfassen üblicherweise die folgenden Bestandteile: ein alkenyliertes Polydiorganosiloxan (insbesondere lineare Polymere mit endständigen Alkenylgruppen), ein Polyorganowasserstoffsiloxan-Vernetzungsmittel sowie einen Hydrosilylierungskatalysator.

Als Katalysatoren für additionsvernetzende Silikonsysteme haben sich Platin oder Platinverbindungen, wie zum Beispiel der Karstedt-Katalysator [eine Pt(0)-Komplexverbindung], durchgesetzt.

Weiterhin können auch photoaktive Katalysatoren, so genannte Photoinitiatoren, in Kombination mit UV-härtbaren kationisch vernetzenden Siloxanen auf Epoxid- und/oder Vinyletherbasis beziehungsweise UV-härtbaren radikalisch vernetzenden Siloxanen wie etwa acrylatmodifizierte Siloxane verwendet werden. Ebenso ist die Verwendung von elektronenstrahlhärtbaren Silikonacrylaten möglich. Entsprechende Systeme können je nach Verwendungszweck auch weitere Zusätze wie Stabilisatoren oder Verlaufshilfsmittel enthalten.

Weiterhin sind verschiedene Arten von Organopolysiloxanmassen bekannt, die durch Erhitzen oder Bestrahlen vernetzen. Genannt seien Massen, wie sie zum Beispiel in der DE 600 01 779 T2 beschrieben werden, die durch Additionsreaktion vernetzen, nämlich durch Temperaturbehandlung eines Gemisches aus einem Organopolysiloxan mit direkt an die Siliciumatome gebundenen Wasserstoffatomen und einem Organopolysiloxan mit direkt an die Siliciumatome gebundenen Vinylgruppen in Gegenwart eines Hydrosilylierungs katalysators.

Auch photopolymerisierbare Organopolysiloxanmassen können verwendet werden. Genannt seien beispielsweise Massen, die durch die Reaktion zwischen Organopolysiloxanen, die mit (Meth)acrylatgruppen substituierte, direkt

an die Siliciumatome gebundene Kohlenwasserstoffreste aufweisen und in Gegenwart eines Photosensibilisators vernetzt werden (siehe EP 0 168 713 B1 oder DE 38 20 294 C1). Ebenfalls verwendbar sind Massen, bei denen die Vernetzungsreaktion zwischen Organopolysiloxanen, die mit Mercaptogruppen substituierte Kohlenwasserstoff direkt an den Siliciumatomen gebunden aufweisen, und Organopolysiloxanen mit direkt an die Siliciumatome gebundenen Vinylgruppen in Gegenwart eines Photosensibilisator hervorgerufen wird. Solche Massen werden beispielsweise in der US 4,725,630 A1 beschrieben.

Beim Einsatz der zum Beispiel in der DE 33 16 166 C1 beschriebenen Organopolysiloxanmassen, die mit Epoxygruppen substituierte, direkt an die Siliciumatomen gebundene Kohlenwasserstoffreste aufweisen, wird die Vernetzungsreaktion durch Freisetzung einer katalytischen Säuremenge induziert, die durch Photozersetzung zugesetzter Oniumsalzkatalysatoren erhalten wird. Andere durch einen kationischen Mechanismus härtbare Organopolysiloxanmassen sind Materialien, welche zum Beispiel Propenyloxysiloxanendgruppen aufweisen.

Von den genannten Silikonen haben die additionsvernetzenden Silikone die größte ökonomische Bedeutung. Eine ungewünschte Eigenschaft dieser Systeme ist allerdings, ihre Empfindlichkeit gegenüber Katalysatorgiften, wie zum Beispiel Schwermetall-, Schwefel- und Stickstoffverbindungen (vgl. hierzu "Chemische Technik, Prozesse und Produkte" von R. Dittmeyer et al., Band 5, 5. Auflage, Wiley-VCH, Weinheim, Deutschland, 2005, Kapitel 6-5.3.2, Seiten 1142). Allgemein gilt, dass Elektronendonatoren als Platingifte angesehen werden können (A. Colas, Silicone Chemistry Overview, Technical Paper, Dow Corning). Demnach sind auch Phosphorverbindungen wie Phosphine und Phosphite als Platingifte anzusehen. Die Präsenz von Katalysatorgiften führt dazu, dass die Vernetzungsreaktion zwischen den unterschiedlichen Bestandteilen eines Silikontrennlackes nicht mehr oder nur zu einem geringen Teil stattfindet. Daher wird bei der Herstellung von antiadhäsiven Silikonbeschichtungen die Anwesenheit von Kontaktgiften, insbesondere von Platingiften, streng vermieden. Solche Platingifte sind in DE102008027502 aufgelistet. In einer bevorzugten Ausführung der Erfindung ist das Gettermaterial kein Platingift.

Besondere Ausführungen der Silikonsysteme sind Polysiloxan-Blockcopolymere, z.B. mit Harnstoff-Block, wie sie von der Fa. Wacker unter dem Handelsnamen Geniomer angeboten werden, oder Trennsysteme aus Fluorsilikonen, die insbesondere bei Klebebändern mit Silkonklebemassen eingesetzt werden.

Weiterhin als Trennschicht eingesetzt werden können Wachse, fluorierte oder teilfluorierte Polymere oder Polyolefine, insbesondere Polyethylen-Blockcopolymere, wie sie in EP 2 025 507 B1 oder WO 2010/022154 A2 offengelegt sind , sowie Carbamate.

Es sind auch Klebebänder möglich, bei denen nicht mit zwei Linern sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Die Dicke der Haftklebemasse, die entweder als Transferklebeband oder auf einem flächigen Gebilde beschichtet vorliegt, beträgt bevorzugt zwischen 1 μm und 2000 μm, weiter bevorzugt zwischen 5 μm und 1000 μm und besonders bevorzugt zwischen etwa 50 μm und 550 μm.

Schichtdicken zwischen 300 μm und 700 μm werden zur Überbrückung von Toleranzen zum Beispiel in der Automobilindustrie benötigt.

Schichtdicken zwischen 1 μm und 50 μm reduzieren den Materialeinsatz. Jedoch kommt es zu einer Verringerung der Haftung aus dem Substrat.

**Filmbildner-Komponente A**

Erfindungsgemäß ist vorgesehen, dass die feuchtigkeitshärtende Zusammensetzung wenigstens eine Filmbildner-Komponente A enthält. Als Filmbildner-Komponente kann grundsätzlich jede Filmbildner-Komponente eingesetzt werden, die dem Fachmann zum Einsatz in haftklebrigen Klebebändern bekannt ist. Dabei handelt es sich in der Regel um Polymere, wie sie zum Beispiel in dem "Handbook of Pressure Sensitive Adhesive Technology" von Donatas Satas (Satas & Associates, Warwick 1999) beschrieben sind.

Als Filmbildner-Komponente A können Elastomere auf der Basis von Acrylaten und/oder Methacrylaten, Polyurethanen, Naturkautschuken, Synthesekautschuken wie Butyl-, (Iso)Butyl-, Nitril- oder Butadienkautschuke, Styrolblockcopolymeren mit einem Elastomerblock aus ungesättigten oder teilweise oder vollständig hydrierten Polydienblöcken (Polybutadien, Polyisopren, Poly(iso)butylen, Copolymeren aus diesen sowie weitere, dem Fachmann geläufige Elastomerblöcke), Polyolefinen, Fluorpolymeren und/oder Silikonen verwendet werden.

Kommt Kautschuk oder Synthesekautschuk oder daraus erzeugte Verschnitte als Basismaterial für die Klebemasse zum Einsatz, dann kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) oder der Polyurethane und/oder deren Verschnitten gewählt werden.

Als Filmbildner-Komponente A kann auch jegliche dem Fachmann bekannte Art von Thermoplast zum Einsatz kommen, wie sie zum Beispiel in den Lehrbüchern "Chemie und Physik der synthetischen Polymere" von J.M.G. Cowie (Vieweg, Braunschweig) und "Makromolekulare Chemie" von B. Tieke (VCH Weinheim, 1997) genannt sind. Dies sind zum Beispiel Poly(ethylen), Poly (propylen), Poly (vinylchlorid), Poly (styrol), Poly (oxymethylene), Poly (ethylenoxid), Poly (ethylenterephthalat), Poly (carbonate), Poly (phenylenoxide), Poly (urethane), Poly(harnstoffe), Acrylnitril-Butadien-Styrol (ABS), Poly(amide) (PA), Poly (lactat) (PLA), Poly (etheretherketon) (PEEK), Poly (sulfon) (PSU), Poly (ethersulfon) (PES). Poly (acrylate), Poly (methacrylate) und Poly (methylmethacrylate) (PMMA) sind zwar als Polymer ebenfalls möglich, jedoch nicht bevorzugt im Sinne der vorliegenden Erfindung.

Die Auswahl der Filmbildner-Komponente A kann vorzugsweise abhängig vom gewählten Epoxidsystem selektiert werden. Werden polare Epoxide (häufig durch Reaktion von Alkoholen mit Epichlorhydrin hergestellt, wie beispielsweise das Reaktionsprodukt aus Bisphenol-A und Epichlorhydrin) verwendet, sind insbesondere polarere Polymere als Filmbildner-Komponente A bevorzugt. Diese umfassen sowohl Elastomere wie Acrylnitril-Butadien-Kautschuke, insbesondere mit hohem Acrylnitrilanteil von mehr als 25%, als auch Thermoplaste wie Poly (ethylenoxid), Poly (ethylenterephthalat), Poly (carbonate), Poly (phenylenoxide), Poly (urethane), Poly(harnstoffe), Poly(amide) (PA), Poly (lactat) (PLA), Poly (etheretherketon) (PEEK), Poly (sulfon) (PSU) und Poly (ethersulfon) (PES).

Für unpolarere Epoxide, wie beispielsweise Dicyclopentadiendiepoxid, sind unpolarere Polymere als Filmbildner-Komponente A bevorzugt. Diese umfassen sowohl Elastomere wie Acrylnitril-Butadien-Kautschuke, insbesondere mit niedrigem Acrylnitrilanteil von weniger als 30%,oder allgemein unpolare Polymere wie Poly (Styrol), Styrolblockcopolymere mit einem Elastomerblock aus ungesättigten oder teilweise oder vollständig hydrierten Polydienblöcken (Polybutadien, Polyisopren, Poly(iso)butylen, Copolymeren aus diesen sowie weitere, dem Fachmann geläufige Elastomerblöcke) oder thermoplastische Polyolefine, Fluorpolymere und/oder Silikone.

Um Haftklebemassen mit besonders hohen Epoxidgehalten zu erhalten, eignen sich besonders alle Polymere für die Filmbildner-Komponente A, die nicht intrinsisch haftklebrig sind also nicht das Dahlquist Kriterium bei Raumtemperatur erfüllen (vgl. J. Adhesion, 1991, Vol. 34, pp. 189-200 oder C. A. Dahlquist: Tack, adhesion, fundamentals and practice, McLaren and Sons Ltd., London, 1966). Dies gilt sowohl für die Filmbildner-Komponente A an sich als auch für die Mischung aus Filmbildner-Komponente A und Klebharz, sofern ein solches zum Einsatz kommt. Obwohl also Filmbildner-Komponente A und ggf. Klebharz per se nicht haftklebrig sind, ist die resultierende Klebemasse der erfindungsgemäßen Klebebänder haftklebrig.

Besonders vorteilhafte Polymere für die Filmbildner-Komponente A zum Erreichen sehr hoher Verklebungsfestigkeiten sind Poly (amide), Polyurethane, Acrylnitril-Butadien-Kautschuke und Poly (harnstoffe), Poly (etheretherketon) (PEEK), Poly (sulfon) (PSU) und Poly (ethersulfon) (PES).

Kommen Polyurethane als Filmbildner-Komponente A zum Einsatz, so haben sich diese als besonders vorteilhaft für gute Klebkräfte im unausgehärteten Zustand gezeigt, wenn das Polyurethan teilkristallin ist und in der DSC Messung einen Schmelze- oder Kristallisationspeak aufweist, der einer Schmelzenthalpie von mindestens 5 J/g, bevorzugt von 20 J/g und besonders bevorzugt von 40 J/g entspricht.

Die Polymere der Filmbildner-Komponente A können von linearer, verzweigter, sternförmiger oder gepfropfter Struktur sein, um nur einige Beispiele zu geben, und als Homopolymer, als statistisches Copolymer, als alternierendes oder als Blockcopolymere aufgebaut sein. Die Bezeichnung "statistisches Copolymer" beinhaltet im Sinne dieser Erfindung nicht nur solche Copolymere, in denen die bei der Polymerisation eingesetzten Comonomere rein statistisch eingebaut sind, sondern auch solche, bei denen Gradienten in der Comonomerzusammensetzung und/oder lokale Anreicherungen einzelner Comonomersorten in den Polymerketten vorkommen. Einzelne Polymerblöcke können als Copolymerblock (statistisch oder alternierend) aufgebaut sein.

In einer besonders bevorzugten Ausführungsform wird das Polymer der Filmbildner-Komponente A des erfindungsgemäßen Klebebandes nach der Beschichtung und vor der Verwendung chemisch vernetzt. Es handelt sich also nach dem Aushärten strenggenommen nicht mehr um ein Elastomer oder Thermoplast. Dies verbessert die klebtechnischen Eigenschaften im unausgehärteten Zustand.

Dabei erfolgt die chemische Vernetzung des Polymers der Filmbildner-Komponente A vorzugsweise strahleninduziert oder über die Zugabe eines Vernetzungsagens, wobei das Vernetzungsagens insbesondere mindestens 2 reaktive Gruppen, ausgewählt aus der Gruppe bestehend aus Isocyanaten, Alkoxysilanen und Alkylhalogeniden enthält, optional unter Zugabe eines multifunktionellen (d.h. $f > 1$) Alkohols oder Amins mit einer Molmasse $M < 10.000$ g/mol. Dabei bezeichnet die Funktionalität f die durchschnittliche Anzahl funktioneller Gruppen pro Molekül.

Die Filmbildner-Komponente A ist besonders bevorzugt ausgewählt aus Elastomeren und/ oder Thermoplasten, insbesondere aus Nitrilkautschuk, Synthesekautschuk, Naturkautschuk, Polyurethanen, Polyacrylaten, Polyamiden oder Mischungen von diesen, wobei die Filmbildnerkomponente A bevorzugt nicht intrinsisch haftklebrig ist.

Die feuchtigkeitshärtende Zusammensetzung enthält erfindungsgemäß 5 bis 60 Gew.-Teile an der wenigstens einen Filmbildner-Komponente A, insbesondere 7,5 bis 55 Gew.-Teile, bevorzugt 15 bis 50 Gew.-Teile, jeweils bezogen auf die feuchtigkeitshärtende Zusammensetzung, wobei sich die Gew.-Teile der Komponente A und B zu 100 ergänzen.

**Epoxid-Komponente B**

Als Epoxid-Komponente B können epoxidhaltige Materialien bzw. Epoxidharze verwendet werden, wobei es sich um beliebige organische Verbindungen mit wenigstens einem Oxiranring handelt, die durch eine Ringöffnungsreaktion polymerisierbar sind. Solche Materialien, die allgemein als Epoxide bezeichnet werden, umfassen sowohl monomere als auch polymere Epoxide und können aliphatisch, cycloaliphatisch oder aromatisch sein. Diese Materialien weisen im Allgemeinen im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material dividiert durch die Gesamtanzahl an vorliegenden Epoxidmolekülen definiert. Neben den Verbindungen mit einem Oxiranring können auch Oxetane, also 4-gliedrige Ringverbindungen, verwendet werden.

Die polymeren Epoxide umfassen lineare Polymere mit endständigen Epoxidgruppen (z. B. ein Diglycidylether eines Polyoxyalkylenglycols), Polymere mit Gerüstoxiraneinheiten (z. B. Polybutadien-Polyepoxid) und Polymere mit Epoxidseitengruppen (z. B. ein Glycidylmethacrylatpolymer oder -copolymer). Das Molekulargewicht des epoxidhaltigen Materials kann von 58 bis etwa 100.000 g/mol oder mehr variieren. Mischungen aus verschiedenen epoxidhaltigen Materialien können auch in den Hotmelt-Zusammensetzungen der Erfindung verwendet werden. Nützliche epoxidhaltige Materialien umfassen jene, die Cyclohexenoxidgruppen, wie die Epoxycyclo-hexancarboxylate, die durch 3,4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylme-thyl)adipat exemplifiziert sind, enthalten. Für eine detailliertere Liste von nützlichen Epoxiden dieser Art kann auf U.S. Patent Nr. 3,117,099 verwiesen werden.

Weitere epoxidhaltige Materialien, die bei der Anwendung dieser Erfindung besonders nützlich sind, umfassen Glycidylethermonomere. Beispiele sind die Glycidylether von mehrwertigen Phenolen, die durch Reaktion eines mehrwertigen Phenols mit einem Überschuss an Chlorhydrin, wie Epichlorhydrin (z. B. der Diglycidylether von 2,2-Bis-(2,3-epoxypropoxyphenol)propan), erhalten werden. Weitere Beispiele von Epoxiden dieses Typs, die bei der Anwendung dieser Erfindung verwendet werden können, sind in U.S. Patent Nr. 3,018,262 beschrieben.

Es gibt eine Vielzahl an im Handel erhältlichen epoxidhaltigen Materialien, die in dieser Erfindung verwendet werden können. Insbesondere geeignet sind Epoxide, die leicht erhältlich sind, wie Octadecylenoxid, Epichlorhydrin, Styroloxid, Vinylcyclohexenoxid, Glycidol, Glycidylmethacrylat, Diglycidylether von Bisphenol A (z. B. jene, die unter den Handelsbezeichnungen EPON 828, EPON 1004 und EPON 1001F von Shell Chemical Co. und DER-332 und DER-334 von Dow Chemical Co. erhältlich sind), Diglycidylether von Bisphenol F (z. B. ARALDITE GY281 von Ciba-Geigy), Vinylcyclohexendioxid (z. B. ERL 4206 von Union Carbide Corp.), 3,4-Ep-oxycyclohexylmethyl-3,4-epoxycyclohexencarboxylat (z. B. ERL-4221 von Union Carbide Corp.), 2-(3,4-Epo-xycyclohexyl-5,5-spiro-3,4-epoxy)cyclohexan-metadioxan (z. B. ERL-4234 von Union Carbide Corp.), Bis(3,4-epoxycyclohexyl)adipat (z. B. ERL-4299 von Union Carbide Corp.), Dipentendioxid (z. B. ERL-4269 von Union Carbide Corp.), epoxidiertes Polybutadien (z. B. OXIRON 2001 von FMC Corp.), silikon-harzhaltige Epoxidfunktionalität, Epoxysilane (z. B. beta-(3,4-Epoxycyclohexyl)ethyltrimethoxysilan und gamma-Glycido-xypropyltrimethoxysilan, im Handel erhältlich von Union Carbide), feuerhemmende Epoxidharze (z. B. DER-542, ein bromiertes bisphenolartiges Epoxidharz, erhältlich von Dow Chemical Co.), 1,4-Butandioldiglycidylether (z. B. ARALDITE RD-2 von Ciba-Geigy), hydrierte, auf Bisphenol A-Epichlorhydrin basierende Epoxidharze (z. B. EPONEX 1510 von Shell Chemical Co.) und Polyglycidylether von Phenolformaldehyd-Novolak (z. B. DEN-431 und DEN-438 von Dow Chemical Co.).

In weiterer Ausgestaltung des erfindungsgemäßen Klebebandes enthält die Epoxid-Komponente B mindestens 10 Gew.-% an bei 25 °C flüssigen Epoxid-Harzen, bezogen auf die Epoxid-Komponente B. Der Anteil solcher flüssiger Epoxid-Harze an der Epoxid-Komponente B liegt insbesondere bei 10 bis 90 Gew.-%, weiter bevorzugt bei 20 bis 75 Gew.-%. Klebebänder mit solchen Verhältnissen aus flüssigen und festen EpoxidKomponenten zeigen im unausgehärteten Zustand besonders ausgewogene Klebeigenschaften. Wird ein Klebeband mit besonders guten Auffließeigenschaften gewünscht, so ist der Anteil an flüssigen Epoxidkomponenten bevorzugt 50 bis 80 Gew.-%. Für Anwendungen, bei denen die Klebebänder bereits im unausgehärteten Zustand eine höhere Last tragen müssen, ist ein Anteil von 15 bis 45 Gew.-% besonders bevorzugt. Es kann ein solches Harz oder auch eine Mischung verschiedener Harze eingesetzt werden.

Ein Maß für die Fließfähigkeit ist die dynamische Viskosität. Die dynamische Viskosität wird vorliegend in einem Zylinderrotationsviskosimeter mit einer Standardgeometrie nach DIN 53019-1 (2008-09) bestimmt. Die Viskosität wird bei einer Messtemperatur von 25 °C und einer Schergeschwindigkeit 1 x $s^{-1}$ gemessen. Als Fluid wird eine Substanz mit einer Viskosität von weniger als 500 Pa·s bezeichnet.

Die Epoxid-Komponente B kann eine mittlere Funktionalität bezogen auf die Alkylenoxid-Gruppen von wenigstens 1,0 bis 6,0 aufweisen, insbesondere von 1,75 bis 3,2, um eine hohe Verklebungsfestigkeit zu erreichen. Die Netzwerkdichte kann über reaktive Verdünner reduziert werden, was zu weniger brüchigen Klebmassen, insbesondere bei hohen Anteilen an Komponente B, führt. Solche reaktiven Verdünner haben typischerweise eine Funktionalität von 1,0. Die Netzwerkdichte wird typischerweise über die Wahl der Epoxidkomponente gesteuert und kann durch Verwendung

von höhermolekularen Epoxiden wie beispielsweise festen Bisphenol-A-Diglycidylethern reduziert werden. Bevorzugt kommen dazu Epoxidharze mit einem Epoxidäquivalent von mehr als 400 g/ eq, insbesondere von mehr als 800 g/eq zum Einsatz.

Das Epoxyäquivalent bzw. die Äquivalentmasse (EEW für Epoxy-Equivalent-Weight) gibt die Menge an Epoxidharz in [g] an, die ein Äquivalent [eq] Epoxidfunktionen besitzt. Sie errechnet sich aus der Molmasse in [g/mol] dividiert durch die Funktionalität f in [eq/Mol]:

$$EEW\ [g/eq] = M\ [g/Mol]\ /\ f\ [eq/Mol]$$

Alternative Konzentrationsangaben erfolgen in [m eq/kg] (manchmal fälschlicherweise auch als [mmol/kg] beschrieben) und in [%]. Eine Epoxidgruppe, d.h. 1 eq ($C_2H_3O$) entspricht 43 g, d.h. 1.000 m eq/kg Epoxid entsprechen 43 g Epoxid/kg , und das sind dementsprechend 4,3 %. Das Epoxyäquivalent wird von Rohstoffherstellern angegeben und nach ISO 3001:1999 ermittelt.

Nach einer bevorzugten Ausführungsform des erfindungsgemäßen Klebebandes enthält die Epoxid-Komponente B wenigstens zwei unterschiedliche Epoxid-Harze B1 und B2, von denen

a. das erste Epoxidharz B1 bei 25 °C eine dynamische Viskosität von weniger als 500 Pa*s aufweist, gemessen nach DIN 53019-1 bei einer Messtemperatur von 25 °C und einer Schergeschwindigkeit 1 x $s^{-1}$, und

b. von denen das zweite Epoxidharz B2 eine Erweichungstemperatur von wenigstens 45 °C oder bei 25 °C eine dynamische Viskosität von wenigstens 1000 Pa*s aufweist, gemessen nach DIN 53019-1 bei einer Messtemperatur von 25 °C und einer Schergeschwindigkeit 1 x $s^{-1}$,

wobei insbesondere der Anteil des ersten Epoxidharzes B1 10 bis 90 Gew.-%, bevorzugt 20 bis 75 Gew.-%und der Anteil des zweiten Epoxidharzes B2 10 bis 90 Gew.-%, bevorzugt 25 bis 80 Gew.-% beträgt, bezogen auf die Epoxidkomponente B.

Die feuchtigkeitshärtende Zusammensetzung enthält erfindungsgemäß 40 bis 95 Gew.-Teile an wenigstens einer Epoxid-Komponente B, insbesondere 45 bis 92,5 Gew.-Teile, bevorzugt 50 bis 85 Gew.-Teile, jeweils bezogen auf die feuchtigkeitshärtende Zusammensetzung, wobei sich die Gew.-Teile der Komponente A und B zu 100 ergänzen.

**Geblocktes Amin**

Erfindungsgemäß ist vorgesehen, dass die feuchtigkeitshärtende Zusammensetzung einen feuchtigkeitsaktivierbaren Härter C enthält, der zumindest ein geblocktes Amin umfasst oder daraus besteht.

Unter einem geblockten Amin werden vorliegend Verbindungen verstanden, die in Gegenwart von Wasser Amine freisetzen.

In bevorzugter Ausgestaltung des erfindungsgemäßen Klebebandes ist das geblockte Amin ein solches, das nach vollständiger Reaktion mit Wasser im entblockten Zustand wenigstens zwei Amin-Wasserstoffatome enthält, da solche Verbindungen mit Epoxiden thermisch stabile Netzwerke bilden, die den Klebstoffen hohe Verklebungsfestigkeiten verleihen. Unter einem Amin-Wasserstoff wird ein Wasserstoff-Atom verstanden, das unmittelbar kovalent an ein Stickstoffatom gebunden ist.

Im Rahmen der vorliegenden Erfindung ist das geblockte Amin vorzugsweise ausgewählt aus der Gruppe umfassend oder bestehend aus Oxazolidinen, Iminen, Enamine, Silylamine oder Kombinationen von diesen, wobei das geblockte Amin insbesondere ein Oxazolidin ist. Ein großer Vorteil an Oxazolidinen ist die kommerzielle Verfügbarkeit, die hohe Reaktivität des freigesetzten sekundären Amins und das unbedenkliche Abspaltungsprodukt, welches im Entblockungsschritt außerdem freigesetzt wird. Insofern ist es besonders bevorzugt, dass das geblockte Amin wenigstens zwei Oxazolidingruppen enthält.

Bei der Verwendung von Iminen, insbesondere Aldiminen ist es vorteilhaft eine feuchtelatente Säure zuzusetzen, die insbesondere ausgewählt ist aus Alkenylestern wie beispielsweise Vinylacetat, Silylester oder Mischungen von diesen. Die Menge an feuchtelatenter Säure beträgt bezogen auf die Menge an Imin insbesondere 0,001 bis 0,15 Mol an feuchtelatenter Säure pro Mol Imin, vorzugsweise 0,01 bis 0,1 Mol an feuchtelatenter Säure pro Mol Imin.

Die feuchtigkeitshärtende Zusammensetzung enthält erfindungsgemäß 10 bis 500 Gew.-Teile des feuchtigkeitsaktivierbaren Härters C, der das wenigstens eine geblockte Amin enthält oder daraus besteht, insbesondere 7,5 bis 300 Gew.-Teile, bevorzugt 5 bis 250 Gew.-Teile, jeweils bezogen auf die feuchtigkeitshärtende Zusammensetzung.

Vorzugsweise wird die Einsatzmenge an geblocktem Amin derart gewählt, dass auf eine Epoxidgruppe der Epoxid-Komponente B 0,95 - 1,5 Amin-Wasserstoffe des freigesetzten Amins kommen, insbesondere 0,98 bis 1,2 Amin-Wasserstoffe. Grund für diese relative Mengenangabe ist die Art der Vernetzungsreaktion von Epoxiden und Aminen.

Nur wenn das molare Verhältnis richtig gewählt ist, kommt es zu Ausbildung chemisch stark vernetzer Strukturen, die besonders hohe Verklebungsfestigkeiten erzielen.

**Stabilisator D**

Im Rahmen der vorliegenden Erfindung kann die feuchtigkeitshärtende Zusammensetzung optional einen oder mehrere Stabilisatoren D enthalten. Der Stabilisator D ist dabei vorzugsweise ausgewählt aus Wasserfängern, Aminfängern sowie Kombinationen aus diesen. Durch den Einsatz dieser Stabilisatoren kann die Lagerfähigkeit des erfindungsgemäßen Klebebandes verbessert werden. Dabei dient der Wasserfänger der Entfernung von Feuchtigkeit, beispielsweise aus der Luft, insbesondere in der Umverpackung des Klebebandes, die ungewollt eine Aushärtung des Klebebandes in Gang setzen könnte. In analoger Weise dient der Aminfänger der Entfernung von Aminen, die ungewollt eine Aushärtung des Klebebandes in Gang setzen könnte. Die abzufangenden Amine können beispielsweise aus der ungewollten Entblockung des geblockten Amins stammen.

**Wasserfänger**

Die Bindung des eindringenden Wassers kann physikalisch durch Adsorption erfolgen, typischerweise an Silica, Molekularsieben, Zeoliten oder Natriumsulfat. Chemisch kann Wasser über Alkoxysilane, Isocyanate, N-Silylamide, Bariumoxid, Phosphorpentoxid, Alkali- und Erdalkalioxide (wie beispielsweise Calciumoxid), metallisches Calcium oder Metallhydride gebunden werden (WO 2004/009720 A2). Zur transparenten Verklebung zum Beispiel von Glassubstraten eignen sich einige Füllstoffe allerdings nicht, da die Transparenz der Klebmasse reduziert wird.

Beschrieben als solche Wasserfänger sind in Klebmassen hauptsächlich anorganische Füllstoffe wie beispielsweise Calciumchlorid oder verschiedene Oxide (vergleiche US 5,304,419 A, EP 2 380 930 A1 oder US 6,936,131 A). In der Verkapselung von organischer Elektronik (z.B. LED, OLED, OPV) findet der Fachmann viele Beispiele für den Einsatz von Wasserfängern.

Auch organische Wasserfänger sind in Klebemassen beschrieben. So zum Beispiel in der EP 2 597 697 A1, in der polymere Alkoxysilane als Wasserfänger verwendet werden. Zahlreiche verschiedene Silane als Wasserfänger in Klebemassen werden in der WO 2014/001005 A1 genannt. Diese sind erfindungsgemäß einsetzbar.

Wasserfänger sind zusammenfassend beispielsweise Salze wie Cobaltchlorid, Calciumchlorid, Calciumbromid, Lithiumchlorid, Lithiumbromid, Magnesiumchlorid, Bariumperchlorat, Magnesiumperchlorat, Zinkchlorid, Zinkbromid, Kieselsäuren (zum Beispiel Silica Gel), Aluminiumsulfat, Calciumsulfat, Kupfersulfat, Bariumsulfat, Magnesiumsulfat, Lithiumsulfat, Natriumsulfat, Cobaltsulfat, Titansulfat, Natriumdithionit, Natriumcarbonat, Natriumsulfat, Kaliumdisulfit, Kaliumcarbonat, Magnesiumcarbonat, Titandioxid, Kieselgur, Zeolithe, Schichtsilikate wie Montmorillonit und Bentonit, Metalloxide wie Bariumoxid, Calciumoxid, Eisenoxid, Magnesiumoxid, Natriumoxid, Kaliumoxid, Strontiumoxid, Aluminiumoxid (aktiviertes Alumina); weiter Kohlenstoffnanoröhrchen, Aktivkohle, Phosphorpentoxid und Silane; leicht oxidierbare Metalle wie beispielsweise Eisen, Calcium, Natrium und Magnesium; Metallhydride wie beispielsweise Calciumhydrid, Bariumhydrid, Strontiumhydrid, Natriumhydrid und Lithiumaluminiumhydrid; Hydroxide wie Kaliumhydroxid und Natriumhydroxid, Metallkomplexe wie zum Beispiel Aluminiumacetylacetonat; des Weiteren organische Absorber, beispielsweise Polyolefin-Copolymere, Polyamid-Copolymere, PET-Copolyester, Anhydride von einfachen und mehrfachen Carbonsäuren wie Essigsäureanhydrid, Propionsäureanhydrid, Buttersäureanhydrid oder Methyltetrahydrophtalsäureanhydrid, Isocyanate oder weitere auf Hybridpolymeren basierte Absorber, die meist in Kombination mit Katalysatoren wie beispielsweise Cobalt verwendet werden; weitere organische Absorber wie etwa schwach vernetzte Polyacrylsäure, Polyvinylalkohol, Ascorbate, Glucose, Gallussäure oder ungesättigte Fette und Öle.

Die Wasserfänger werden ihrer Funktion entsprechend bevorzugt im Wesentlichen wasserfrei eingesetzt. Dies unterscheidet Wasserfänger von ähnlichen Materialien, die als Füllstoff eingesetzt werden. So wird Silica zum Beispiel in der Form von pyrogener Kieselsäure häufig als Füllstoff eingesetzt. Wird dieser Füllstoff jedoch wie üblich unter Umgebungsbedingungen gelagert, nimmt er bereits Wasser aus der Umgebung auf und ist nicht mehr in technisch nutzbarem Umfang als Wasserfänger funktionsfähig. Erst getrocknetes oder trocken gehaltenes Silica kann als Wasserfänger genutzt werden. Es ist jedoch auch möglich, bereits teilweise mit Permeaten komplexierte Materialien zu verwenden, beispielsweise CaSO4*1/2H2O (Calciumsulfat-Halbhydrat) oder teilhydrierte Kieselsäuren, die per Definition als Verbindungen der allgemeinen Formel (SiO2)m*nH2O vorliegen.

Unter Kieselsäuren werden, wie vorstehend beschrieben, Verbindungen der allgemeinen Formel $(SiO_2)_m{*}nH_2O$ verstanden. Es handelt sich dabei um durch nasschemische, thermische oder pyrogene Verfahren hergestelltes Siliciumdioxid. Insbesondere sind unter den Kieselsäuren Kieselgele beziehungsweise Silicagele, beispielsweise mit Kobalt-Verbindungen als Feuchteindikator imprägnierte Kieselgele (Blaugel), und pyrogene Kieselsäuren geeignete Wasserfänger.

Nach einer bevorzugten Ausführungsform des erfindungsgemäßen Klebebandes umfasst der Wasserfänger zumindest eine Alkoxysilanverbindung, insbesondere eine Alkoxysilanverbindung, die in alpha-Stellung ein Heteroatom

oder eine Vinlygruppe trägt.

Der Wasserfänger kann beispielsweise in Mengen von 0,1 bis 20 Gew.-%, bezogen auf die Feuchtigkeitshärtende Zusammensetzung eingesetzt werden, insbesondere von 0,5 bis 10 Gew.-%.

## Aminfänger

Der Aminfänger ist insbesondere aus der Gruppe der Vinylcarboxylate ausgewählt. Hierfür kommen Verbindungen der folgenden allgemeinen Formel in Frage

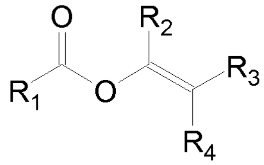

in der $R_1$ bis $R_4$ für ein Wasserstoffatom oder einen organischen Rest stehen und gleich oder verschieden sein können.

Das Vinylcarboxylat kann beispielsweise ausgewählt sein aus Vinylacetat, Vinylbutyrat, Vinylcaproat, Vinylcaprylat, Vinylcaprat, Vinyllaurat, Vinylmyristat, Vinylpalmitat, Vinylstearat, Vinylcyclohexancarboxylat, Vinyloctoat, Vinylmonochloroacetat, Divinyladipat, Vinylmethacrylat, Vinylcrotonat, Vinylsorbat, Vinylbenzoat, Vinylcinnamat oder Kombinationen von diesen.

Außerdem denkbar als Aminfänger sind mit Aminen reagierende Stoffe wie schwache Säuren, die keine kationische Polymerisation von Epoxiden starten wie beispielsweise Phosphonsäure ($H_3PO_3$) oder Phosphinsäure ($H_3PO_2$); oder Isocyanate (-NCO), Thiocyante (-SCN), Isothiocyanate (-NCS), Säurehalogenide, insbesondere Säurechloride, Anhydride, insbesondere Isatosäureanhydrid und Bernsteinsäureanhydride, Alkylhalogenide insbesondere Benzylhalogenide, Ketone, insbesondere aktivierte Ketone wie beispielsweise beta-Diketone, Aldehyde insbesondere Benzaldehyde, Sulfonylchloride, Vinylcarboxylate.

Bevorzugt können auch polymergebundene Aminfänger eingesetzt werden, die die oben genannten chemischen Gruppen enthalten können, wie sie z.B. von Sigma-Aldrich oder Rapp Polymere vertrieben werden.

Für Klebebänder mit hohen Schichtdicken können auch partikuläre Aminfänger verwendet werden, bei denen die reaktiven Gruppen an Silica gebunden sind. Bevorzugt sind Partikel von 100 $\mu$m oder kleiner.

Der Aminfänger kann beispielsweise in Mengen von 0,01 bis 10 Gew.-%, bezogen auf die Feuchtigkeitshärtende Zusammensetzung eingesetzt werden, insbesondere von 0,1 bis 5 Gew.-%.

Nach einer besonders bevorzugten Ausführungsform des erfindungsgemäßen Klebebandes ist die Einsatzmenge an geblocktem Amin derart gewählt, dass auf die molare Menge der Epoxidgruppen der Epoxid-Komponente B oder, sofern ein Aminfänger zugegen ist, auf die molare Summe der Epoxidgruppen der Epoxid-Komponente B und der Aminfängergruppen des Aminfängers, die 0,95 bis 1,5-fache molare Menge an Amin-Wasserstoffen des freigesetzten Amins kommen, insbesondere die 0,98 bis 1,2-fache molare Menge. Grund für diese relative Mengenangabe ist, dass durch den optionalen Einsatz von Aminfängern ein Teil der Amin-Wasserstoffe abgefangen wird und dann nicht mehr für die Feuchtigkeitshärtung zur Verfügung steht. Aminfänger werden vorteilhaft verwendet, da im Gegensatz zu flüssigen Klebstoffen in der Herstellung von Klebebändern kleine Mengen an Feuchtigkeit nicht ohne großen Aufwand ausgeschlossen werden können und somit gegebenenfalls bereits kleine Mengen an Aminen mit Epoxiden reagieren, was sich negativ auf die klebtechnischen Eigenschaften im unausgehärteten Zustand auswirken kann.

## Zusatzstoff E

Als Zusatzstoffe E kommen sämtliche dem Fachmann bekannte Zusatzstoffe für Klebebänder und Haftklebemassen in Betracht, wie beispielsweise Beschleuniger, Klebharze, sogenannte tackifier, Rheologiemodifizierer, Schäumungsmittel, Füllstoffe, Adhäsionsvermittler, Polyole, Alterungsschutzmittel, Lichtschutzmittel, Farbstoffe, Schlagzähmodifizierer, Phenoxyharze oder Mischungen von diesen.

Für die vorliegende Erfindung können Klebharze verwendet werden, jedoch ist für die Klebemassen der vorliegenden Erfindung ein Klebharz entbehrlich. Es wird auch ohne Klebharzzusatz die gewünschte Haftklebrigkeit der Klebemasse erreicht.

Sofern Klebharze zum Einsatz kommen, sind hierfür Klebharze, wie sie dem Fachmann zum Beispiel aus dem Satas bekannt sind, geeignet. Dabei kann die Haftklebemasse zumindest eine Sorte eines vorzugsweise zumindest teilhydrierten Klebharzes, z.B, solche, die mit der Elastomerkomponente beziehungsweise, sofern ein aus Hart- und Weichblöcken aufgebautes Copolymer eingesetzt wird, hauptsächlich mit dem Weichblock verträglich sind (Weichharze) enthalten.

Ein entsprechendes Klebharz kann eine Erweichungstemperatur gemessen mittels Ring&Ball-Methode von größer 25 °C sowie ergänzend zumindest eine Sorte Klebharz mit einer Erweichungstemperatur von kleiner 20 °C aufweisen. Hierüber kann, falls erforderlich, zum einen das klebtechnische Verhalten, zum anderen aber auch das Auffließverhalten auf dem Verklebungsuntergrund feineingestellt werden.

Für eher unpolare Elastomere können als Harze in der Haftklebemasse partiell oder vollständig hydrierte Harze auf Basis von Kolophonium und Kolophoniumderivaten, hydrierte Polymerisate des Dicyclopentadiens, partiell, selektiv oder vollständig hydrierte Kohlenwasserstoffharze auf Basis von $C_5$-, $C_5$/$C_9$- oder $C_9$-Monomerströmen, Polyterpenharze auf Basis von α-Pinen und/oder β-Pinen und/oder δ-Limonen und/oder $\Delta^3$-Caren, hydrierte Polymerisate von bevorzugt reinen Cs- und $C_9$-Aromaten. Vorgenannte Klebharze können sowohl allein als auch im Gemisch eingesetzt werden.

Dabei können sowohl bei Raumtemperatur feste als auch flüssige Harze zum Einsatz kommen. Um eine hohe Alterungs- und UV-Stabilität zu gewährleisten, sind hydrierte Harze mit einem Hydrierungsgrad von mindestens 90 %, vorzugsweise von mindestens 95 % bevorzugt.

Als Füllstoffe können beispielsweise Kreiden, Kaoline und Silikate verwendet werden. Geeignete thixotropierende Füllstoffe sind Aerosil und Soccal-Kreiden.

Als weitere Additive können typischerweise genutzt werden:

- Plastifizierungsmittel wie zum Beispiel Weichmacheröle, oder niedermolekulare flüssige Polymere, wie zum Beispiel niedermolekulare Polybutene, vorzugsweise mit einem Anteil von 0,2 bis 5 Gew.-% bezogen auf das Gesamtgewicht der Haftklebemasse
- primäre Antioxidantien wie zum Beispiel sterisch gehinderte Phenole, vorzugsweise mit einem Anteil von 0,2 bis 1 Gew.-% bezogen auf das Gesamtgewicht der Haftklebemasse
- sekundäre Antioxidantien, wie zum Beispiel Phosphite oder Thioether, vorzugsweise mit einem Anteil von 0,2 bis 1 Gew.-% bezogen auf das Gesamtgewicht der Haftklebemasse
- Prozessstabilisatoren wie zum Beispiel C-Radikalfänger,
  vorzugsweise mit einem Anteil von 0,2 bis 1 Gew.-% bezogen auf das Gesamtgewicht der Haftklebemasse
- Verarbeitungshilfsmittel,
  vorzugsweise mit einem Anteil von 0,2 bis 1 Gew.-% bezogen auf das Gesamtgewicht der Haftklebemasse
- Endblockverstärkerharze,
  vorzugsweise mit einem Anteil von 0,2 bis 10 Gew.-% bezogen auf das Gesamtgewicht der Haftklebemasse sowie

gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, vorzugsweise mit einem Anteil von 0,2 bis 10 Gew.-% bezogen auf das Gesamtgewicht der Haftklebemasse.

In besonders bevorzugter Ausgestaltung des erfindungsgemäßen Klebebandes umfasst der Zusatzstoff E zumindest einen Beschleuniger, der insbesondere ausgewählt ist aus Alkoholen, Alkoxysilanen, geblockten Säuren, bevorzugt Silylcarboxylaten, sowie Kombinationen von diesen.

Die Einsatzmenge des Beschleunigers liegt vorzugsweise bei 0,1 bis 10 Gew.-%, insbesondere bei 0,5 bis 5 Gew.-%, bevorzugt bei 1 bis 3 Gew.-%, jeweils bezogen auf die Epoxidkomponente B.

Die feuchtigkeitshärtende Zusammensetzung enthält erfindungsgemäß optional 0,1 bis 200 Gew.-Teile an wenigstens einem Zusatzstoff E, insbesondere 50 bis 150 Gew.-Teile, bevorzugt 10 bis 100 Gew.-Teile.

Ein besonders bevorzugtes erfindungsgemäßes Klebeband ist dadurch gekennzeichnet, dass die feuchtigkeitshärtende Zusammensetzung

A 10 bis 50 Gew.-Teile der wenigstens einen Filmbildner-Komponente und/oder
B 50 bis 90 Gew.-Teile der wenigstens einen Epoxid-Komponente und/oder
C 5 bis 250 Gew.-Teile des geblockten Amins und/oder
D 0,1 bis 15 Gew.-Teile des wenigstens einen Stabilisators und/ oder
E 0,1 bis 200 Gew.-Teile des wenigstens einen Zusatzstoffs

enthält oder daraus besteht, wobei sich die Gew.-Teile der Komponente A und B zu 100 ergänzen und wobei die Einsatzmenge an geblocktem Amin derart gewählt ist, dass auf die molare Menge der Epoxidgruppen der Epoxid-Komponente B oder, sofern ein Aminfänger in der Komponente D zugegen ist, auf die molare Summe der Epoxidgruppen der Epoxid-Komponente B und der Aminfängergruppen des Aminfängers, die 0,95 bis 1,5-fache molare Menge an Amin-Wasserstoffen des freigesetzten Amins kommen, insbesondere die 0,98 bis 1,2-fache molare Menge.

Bevorzugt besitzt das erfindungsgemäße Klebeband eine Repositionierbarkeit an Luft mit 50 % rel. Luftfeuchte und 23 °C von wenigstens 30 Minuten, bevorzugt zumindest 4 Stunden, weiter bevorzugt wenigstens 8 Stunden, noch mehr bevorzugt wenigstens 12 Stunden, insbesondere 12 bis 24 Stunden. Besonders bevorzugt beträgt die Repositionierbarkeit an Luft mit 50 % rel. Luftfeuchte und 23 °C nicht mehr als 24 Stunden.

Ein weiterer Gegenstand der vorliegenden Erfindung betrifft ein Verfahren zum Zusammenfügen von zwei Bauteilen mittels eines erfindungsgemäßen Klebebandes, wobei das Verfahren dadurch gekennzeichnet ist, dass das Klebeband auf das erste Bauteil aufgebracht und zur Aktivierung der Aushärtung mit Feuchtigkeit, insbesondere Luft mit wenigstens 15% rel. Luftfeuchtigkeit, in Kontakt gebracht wird.

Die erfindungsgemäßen Klebebänder lassen sich beispielsweise in der Assembly Line im Automobilbau oder in der Elektronikindustrie, beispielsweise für Verklebungen in Mobiltelefonen oder Tablets, einsetzen. Bei fehlerhafter Positionierung ist dann eine Korrektur der Verklebung innerhalb der vorgenannten Zeitspannen möglich.

Das erfindungsgemäße Klebeband kann in allen üblichen Darreichungsformen ausgestaltet werden, beispielsweise als Rollenware, Stanzlinge, Bandabschnitte und dergleichen. Das Klebeband wird vorzugsweise in versiegelten metallbeschichteten Verpackungen vertrieben, beispielsweise in aluminiumbeschichteten Folienverpackungen. Diese können vakuumiert oder mit einem Schutzgas befüllt sein.

Die vorliegende Erfindung wird im Folgenden anhand von Ausführungsbeispielen näher erläutert.

**Beispiele:**

**Klebkraft:**

Die Klebkräfte auf Stahl wurden analog ISO 29862 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wurde eine geätzte PET-Folie mit einer Dicke von 36 μm verwendet, wie sie von der Fa. Coveme (Italien) erhältlich ist. Die Verklebung des Messstreifens wurde dabei mittels einer Anrollmaschine bei einer Temperatur von 23 °C vorgenommen. Die Klebebänder wurden sofort nach der Applikation abgezogen. Der Messwert (in N/cm) ergab sich als Mittelwert aus drei Einzelmessungen.

**Verklebungsfestigkeit - Zugscherversuch:**

Als Kenngröße für die Qualität der erzielten Verklebung wurde die Verklebungsfestigkeit eines nach dem erfindungsgemäßen Verfahren hergestellten Verbunds für die unterschiedlichen Klebebänder ermittelt. Hierzu wurde die Verklebungsfestigkeit in einem dynamischen Zugscherversuch in Anlehnung an DIN-EN 1465 bei 23 °C und 50 % relative Feuchte (r.F.) für eine Prüfgeschwindigkeit von 10 mm/min jeweils quantitativ bestimmt (Ergebnisse in $N/mm^2$ = MPa). Als Prüfstäbe kamen solche aus Stahl zum Einsatz, welche vor der Verklebung mit Aceton gereinigt wurden. Die Schichtdicken der Klebebänder entsprachen jeweils den obigen Angaben. Angegeben ist der Mittelwert aus drei Messungen.

**Repositionierbarkeit:**

Zur Ermittlung der Repositionierbarkeit wird bei 23 ±1 °C / 50 ± 5 % r.F. ein 10 cm x 2 cm breiter Klebestreifen des zu testenden Klebebandes mit einer Verstärkungsfolie wie zum Beispiel Aluminium oder geätztes PET ausgerüstet und dann auf einer mit Aceton gereinigten Stahlplatte verklebt. Die Streifen werden mit einer 4 kg Rolle mit ca. 10 cm/s überrollt (5 mal hin und her). Nach 8h werden die verklebten Streifen mit ca. 10 cm/s im Winkel von ca. 135° manuell vom Haftgrund abgezogen. Die Beurteilung erfolgt visuell.

Beurteilt wird die Menge an Rückstandsbildung in % der verklebten Fläche. Die Benotung erfolgt gemäß folgender Tabelle:

| Note | Masserückstände in % der verklebten Fläche |
|---|---|
| 1 | keine Rückstände |
| 2 | vereinzelt Massepunkte < 10 |
| 3 | 10 - 30 |
| 4 | 31 - 50 |
| 5 | 51 - 100 |

Zur Beurteilung wird zusätzlich die Scherfestigkeit nach Repositionierung gemessen. Dazu wird ein Klebeband bei 23°C / 50% r.F. verklebt, nach 24h repositioniert und 30 d bei 23°C / 50% r.F. aushärten gelassen.

Verwendete Rohstoffe:

| | |
|---|---|
| Desmomelt 530 | Weitgehend lineares Hydroxylpolyurethan. Desmomelt 530 ist ein stark kristallisierendes, elastisches Polyurethan sehr geringer Thermoplastizität der Firma Bayer MaterialScience |
| Epon Resin 828 | Difunktionelles Bisphenol-A / epichlorhydrin Flüssigepoxid mit einem Gewicht pro Epoxid von 185 - 192 g/eq der Firma Momentive. |
| PolyDis PD3611 | Nitrilkautschukmodifiziertes Epoxidharz auf der Basis von Bisphenol-F-diglycidylether mit einem Elastomergehalt von 40% und einem Gewicht pro Epoxid von 550 g/eq der Firma Schill + Seilacher "Struktol". |
| Tactix 556 | Dicyclopentadien-Epoxy-Novolak Harz mit einem Gewicht pro Epoxid von 215 - 235 g/eq und einem Erweichungspunkt von 53°C der Firma Huntsman. |
| Incozol 4 | Bis-Oxazolidin zur Härtung von Isocyanatprepolymeren (bis[2-[2-(1-methylethyl)-3-oxazolidinyl]ethyl] hexane-1,2-diylbiscarbamate) |
| Incozol BH | Latentes Aldimin zur Härtung von Isocyanaten. (N,N-dibenzyliden polyoxypropylene diamine (polymer)) |
| Vinylacetat | Stabilisator, reagiert mit Aminen unter Abspaltung von Vinylalkohol (CAS: 108-05-4) |
| Trimethylsilylacetat | Beschleuniger für Aldimin/Ketimin Zersetzung. Setzt nach Reaktion mit Wasser Essigsäure frei. (CAS: 2754-27-0) |
| Calciumoxid | Wasserfänger (CAS: 1305-78-8) |
| Vinyltrimethoxysilan | Wasserfänger (CAS: 2768-02-7) |

| **Beispiel:** | **K1** | **K2** | **K3** | **K4** | **K5** | **K6** | **V1** | **V2** |
|---|---|---|---|---|---|---|---|---|
| | Gew. teile | Gew. teile | Gew. teile | Gew. teile | Gew. teile | Gew. teile | Gew. teile | Gew. teile |
| Desmomelt 530 | 40 | 23 | 23 | 23 | 23 | 23 | 40 | |
| Epon Resin 828 | 60 | | | | | | 60 | 60 |
| PolyDis PD3611 | | 45 | 45 | 45 | 45 | 45 | | |
| Tactix 556 | | 14 | 14 | 14 | 14 | 14 | | |
| Incozol 4 | 39 | 17 | 17 | 18,5 | | | | 39 |
| Incozol BH | | | | | 17 | 17 | | |
| Vinyltrimethoxysilan | | - | 1 | 1 | | 1 | | |
| Vinylacetat | | | | 0,5 | | | | |
| Trimethylsilylacetat | | | | | | 0,5 | | |
| CaO | 5 | 5 | 5 | | 5 | 5 | 5 | 5 |

Aus den Klebemassen K1 - K6 und V1 wurden wie folgt Klebebänder hergestellt:
Die Herstellung der Haftklebemassen erfolgte im Labor durch Lösen des Filmbildners in getrocknetem Butanon bei 23°C. Anschließend wurde das/wurden die Reaktivharz(e) zugegeben. Die Stabilisatoren (Wasserfänger und Aminfänger) wurde unter Rühren zugegeben. Zuletzt wurde der Härter zugegeben.

Zur Herstellung von Klebemasseschichten wurden die verschiedene Klebemassen aus einer Lösung auf einen konventionellen Liner (silikonisierte Polyesterfolie) mittels eines Laborstreichgeräts bei 23°C / 50% r.F. aufgebracht und getrocknet. Die Klebemassenschichtdicke nach dem Trocknen beträgt $100 \pm 10$ μm. Die Trocknung erfolgte jeweils zunächst bei RT für 10 Minuten und 10 Minuten bei 105 °C in einem Labortrockenschrank. Die getrockneten Klebemasseschichten wurden jeweils unverzüglich nach dem Trocknen mit einem zweiten Liner (silikonisierte Polyesterfolie mit geringerer Trennkraft) auf der offenen Seite laminiert.

Die Eigenschaften der erfindungsgemäßen Klebebänder mit den Haftklebemassen K1 bis K5 und den Vergleichsmassen V1 und V2 sind in folgender Tabelle zusammengefasst:

| **Beispiel:** | **K1** | **K2** | **K3** | **K4** | **K5** | **K6** | **V1** | **V2** |
|---|---|---|---|---|---|---|---|---|
| Klebkraft (N/cm) frisch | 3,2 | 9,8 | 8,3 | 7,9 | 5,6 | 5,5 | 3,4 | nicht messbar |

(fortgesetzt)

| Beispiel: | K1 | K2 | K3 | K4 | K5 | K6 | V1 | V2 |
|---|---|---|---|---|---|---|---|---|
| Scherfestigkeit (MPa) nach 30d 23°C/50%r.F. | 11,6 | 7,4 | 9,1 | 8,6 | 2,1 | 3,9 | 0,1 | 9,3 |
| Repositionierbarkeit | 1 | 1 | 1 | 1 | 1 | 1 | 2 | 5 |
| Scherfestigkeit nach Repositionierung (MPa) | 10,9 | 8,1 | 9,4 | 8,9 | 2,6 | 3,7 | 0,1 | - |

Die erfindungsgemäßen Klebebänder mit den Klebemassen K1 - K5 zeigen im ungehärteten Zustand (frisch) Klebkräfte größer 1 N/cm auf. Gleichzeitig steigen die Verklebungsfestigkeiten nach Aushärtung (30d, 23°C, 50% r.F.) auf über 2 MPa. Hier hat sich gezeigt, dass bei Verwendung von Oxazolidinhärtern (K2 und K3) die Zugabe von Wasserfängern (Calciumoxid und Vinyltrimethoxysilan) einerseits die Lagerstabilität erhöht und gleichzeitig im Falle von Vinyltrimethoxysilan aufgrund der durch Feuchtigkeit freigesetzten Alkohole die Aushärtung beschleunigt bzw. verbessert (leicht erhöhte Scherfestigkeiten).

Ohne die erfindungsgemäßen latenten Härter lassen sich zwar Klebebänder herstellen, jedoch härten diese nicht über die Zeit mit Feuchtigkeit aus (V1). Typische flüssige feuchtehärtende Epoxidklebstoffe (beispielsweise in US6803445B2 beschrieben) härten zwar mit Feuchtigkeit aus, ergeben aber keine Klebebänder (V2).

Um die Lagerzeit zu verbessern, bzw. die Zeit, in der das Klebeband repositionierbar ist in Gegenwart von Feuchtigkeit zu steuern, können zusätzlich Aminfänger zugesetzt werden. Der Vergleich von K3 und K4 zeigt, dass die Zugabe von Vinylacetat keine negativen Auswirkungen auf die klebtechnischen Eigenschaften hat. Zu beachten ist in diesen Fällen nur, dass der Aminfänger reaktive Amin-Wasserstoffe des geblockten Amins bindet und somit eine entsprechend der Aminfängermenge erhöhte Menge geblocktes Amin zugesetzt werden muss.

Auch mit Aldiminen als latenter Härter lassen sich feuchtehärtende Klebebänder herstellen (K5 - K6). Hier hat sich gezeigt, dass es vorteilhaft ist eine feuchtelatente Säure (Trimethylsilylacetat) zuzusetzen. Einerseits wird somit die Lagerdauer erhöht, da eindringendes Wasser abgefangen wird. Andererseits katalysiert die freigesetzte Säure die Aldimin-Wasser Reaktion, was zu verbesserten Scherfestigkeiten führt.

## Patentansprüche

1. Haftklebriges Klebeband, enthaltend oder bestehend aus einer feuchtigkeitshärtenden Zusammensetzung, enthaltend oder bestehend aus:

   A 5 bis 60 Gew.-Teile wenigstens einer Filmbildner-Komponente;
   B 40 bis 95 Gew.-Teile wenigstens einer Epoxid-Komponente;
   C 10 bis 500 Gew.-Teile wenigstens eines feuchtigkeitsaktivierbaren Härters;
   D optional 0,1 bis 15 Gew.-Teile wenigstens eines Stabilisators, sowie
   E optional 0,1 bis 200 Gew.-Teile wenigstens eines Zusatzstoffs,

   jeweils bezogen auf die feuchtigkeitshärtende Zusammensetzung, wobei sich die Gew.-Teile der Komponente A und B zu 100 ergänzen,
   **dadurch gekennzeichnet, dass**
   der feuchtigkeitsaktivierbare Härter C zumindest ein geblocktes Amin umfasst oder daraus besteht.

2. Klebeband nach Anspruch 1, **dadurch gekennzeichnet, dass** die Filmbildner-Komponente A ausgewählt ist aus Elastomeren und/ oder Thermoplasten, insbesondere aus Nitrilkautschuk, Synthesekautschuk, Naturkautschuk, Polyurethanen, Polyacrylaten, Polyamiden oder Mischungen von diesen, wobei die Filmbildnerkomponente A bevorzugt nicht intrinsisch haftklebrig ist.

3. Klebeband nach Anspruch 1 oder 2, **dadurch gekennzeichnet, dass** die Epoxid-Komponente B mindestens 10 Gew.-% bei 25 °C flüssige Epoxidharze enthält, bezogen auf die Epoxid-Komponente B.

4. Klebeband nach einem der vorstehenden Ansprüche, **dadurch gekennzeichnet, dass** das geblockte Amin ein solches ist, das in Gegenwart von Wasser ein Amin freisetzt.

5. Klebeband nach einem der vorstehenden Ansprüche, **dadurch gekennzeichnet, dass** das geblockte Amin ein solches ist, das nach vollständiger Reaktion mit Wasser im entblockten Zustand wenigstens zwei Amin-Wasserstoffatome enthält.

6. Klebeband nach einem der vorstehenden Ansprüche, **dadurch gekennzeichnet, dass** das geblockte Amin ausgewählt aus der Gruppe umfassend oder bestehend aus Oxazolidinen, Iminen, Enamine, Silylamine oder Kombinationen von diesen, wobei das geblockte Amin insbesondere ein Oxazolidin ist.

7. Klebeband nach Anspruch 6, **dadurch gekennzeichnet, dass** das geblockte Amin wenigstens zwei Oxazolidingruppen enthält.

8. Klebeband nach einem der vorstehenden Ansprüche, **dadurch gekennzeichnet, dass** die Einsatzmenge an geblocktem Amin derart gewählt ist, dass auf eine Epoxidgruppe der Epoxid-Komponente B 0,95 - 1,5 Amin-Wasserstoffe des freigesetzten Amins kommen.

9. Klebeband nach einem der vorstehenden Ansprüche, **dadurch gekennzeichnet, dass** der Stabilisator D ausgewählt ist aus Wasserfängern, Aminfängern sowie Kombinationen aus diesen, wobei der Wasserfänger vorzugsweise zumindest eine Alkoxysilanverbindung umfasst, insbesondere eine Alkoxysilanverbindung, die in alpha-Stellung ein Heteroatom oder eine Vinlygruppe trägt und / oder der Aminfänger vorzugsweise ausgewählt ist aus der Gruppe der Vinylcarboxylate.

10. Klebeband nach einem der vorstehenden Ansprüche, **dadurch gekennzeichnet, dass** die Einsatzmenge an geblocktem Amin derart gewählt ist, dass auf die molare Menge der Epoxidgruppen der Epoxid-Komponente B oder, sofern ein Aminfänger zugegen ist, auf die molare Summe der Epoxidgruppen der Epoxid-Komponente B und der Aminfängergruppen des Aminfängers, die 0,95 bis 1,5-fache molare Menge an Amin-Wasserstoffen des freigesetzten Amins kommen, insbesondere die 0,98 bis 1,2-fache molare Menge.

11. Klebeband nach einem der vorstehenden Ansprüche, **dadurch gekennzeichnet, dass** der Zusatzstoff E zumindest einen Beschleuniger umfasst, der insbesondere ausgewählt ist aus Alkoholen, geblockten Säuren, bevorzugt Silylcarboxylaten, sowie Kombinationen von diesen.

12. Klebeband nach einem der vorstehenden Ansprüche, **dadurch gekennzeichnet, dass** die feuchtigkeitshärtende Zusammensetzung

    A 10 bis 50 Gew.-Teile der wenigstens einen Filmbildner-Komponente und/oder
    B 50 bis 90 Gew.-Teile der wenigstens einen Epoxid-Komponente und/oder
    C 5 bis 250 Gew.-Teile des geblockten Amins und/oder
    D 0,1 bis 15 Gew.-Teile des wenigstens einen Stabilisators und/ oder
    E 0,1 bis 200 Gew.-Teile des wenigstens einen Zusatzstoffs

    enthält oder daraus besteht, wobei sich die Gew.-Teile der Komponente A und B zu 100 ergänzen und wobei die Einsatzmenge an geblocktem Amin derart gewählt ist, dass auf die molare Menge der Epoxidgruppen der Epoxid-Komponente B oder, sofern ein Aminfänger in der Komponente D zugegen ist, auf die molare Summe der Epoxidgruppen der Epoxid-Komponente B und der Aminfängergruppen des Aminfängers, die 0,95 bis 1,5-fache molare Menge an Amin-Wasserstoffen des freigesetzten Amins kommen, insbesondere die 0,98 bis 1,2-fache molare Menge.

13. Klebeband nach einem der vorstehenden Ansprüche, **dadurch gekennzeichnet, dass** die Repositionierbarkeit des Klebebandes an Luft mit 50 % rel. Luftfeuchte und 23 °C wenigstens 12 Stunden beträgt, insbesondere 12 bis 24 Stunden.

14. Verfahren zum Zusammenfügen von zwei Bauteilen mittels eines Klebebandes nach Anspruch einem der Ansprüche 1 bis 13, **dadurch gekennzeichnet, dass** das Klebeband auf das erste Bauteil aufgebracht und zur Aktivierung der Aushärtung mit Feuchtigkeit, insbesondere Luft mit wenigstens 15% rel. Luftfeuchtigkeit, in Kontakt gebracht wird.

## Claims

1. Pressure-sensitive adhesive tape, comprising or consisting of a moisture-curing composition, comprising or consisting of:

A 5 to 60 parts by weight of at least one film-forming component;
B 40 to 95 parts by weight of at least one epoxide component;
C 10 to 500 parts by weight of at least one moisture-activatable curing agent;
D optionally, 0.1 to 15 parts by weight of at least one stabilizer, and
E optionally, 0.1 to 200 parts by weight of at least one additive,

based in each case on the moisture-curing composition, wherein the parts by weight of components A and B total 100, **characterized in that**
the moisture-activatable curing agent C comprises or consists of at least one blocked amine.

2. Adhesive tape according to Claim 1, **characterized in that** the film-forming component A is selected from elastomers and/or thermoplastics, in particular nitrile rubber, synthetic rubber, natural rubber, polyurethanes, polyacrylates, polyamides or mixtures thereof, wherein the film-forming component A is preferably not intrinsically pressure-sensitive.

3. Adhesive tape according to Claim 1 or 2, **characterized in that** the epoxide component B contains at least 10 wt% at 25°C of liquid epoxide resins, based on the epoxide component B.

4. Adhesive tape according to one of the preceding claims, **characterized in that** the blocked amine is one that releases an amine in the presence of water.

5. Adhesive tape according to one of the preceding claims, **characterized in that** the blocked amine is one that, after complete reaction with water in an unblocked state, contains at least two amine hydrogen atoms.

6. Adhesive tape according to one of the preceding claims, **characterized in that** the blocked amine is selected from the group comprising or consisting of oxazolidines, imines, enamines, silyl amines or combinations thereof, wherein the blocked amine in particular is an oxazolidine.

7. Adhesive tape according to Claim 6, **characterized in that** the blocked amine contains at least two oxazolidine groups.

8. Adhesive tape according to one of the preceding claims, **characterized in that** the amount of blocked amine used is selected such that there are 0.95-1.5 amine hydrogens of the released amine per epoxide group of the epoxide component B.

9. Adhesive tape according to one of the preceding claims, **characterized in that** the stabilizer D is selected from water scavengers, amine scavengers, and combinations thereof, wherein the water scavenger preferably comprises at least one alkoxysilane compound, in particular an alkoxysilane compound that carries a heteroatom or a vinyl group in the $\alpha$-position, and/or the amine scavenger is preferably selected from the group of the vinyl carboxylates.

10. Adhesive tape according to one of the preceding claims, **characterized in that** the amount of blocked amine used is selected such that there is a 0.95 to 1.5-fold molar amount, and in particular a 0.98 to 1.2-fold molar amount, of amine hydrogens of the released amine per molar amount of the epoxide groups of the epoxide component B, or, if an amine scavenger is present, per molar sum of the epoxide groups of the epoxide component B and the amine scavenger groups of the amine scavenger.

11. Adhesive tape according to one of the preceding claims, **characterized in that** the additive E comprises at least one accelerator that is selected in particular from alcohols, blocked acids, preferably silyl carboxylates, and combinations thereof.

12. Adhesive tape according to one of the preceding claims, **characterized in that** the moisture-curing composition comprises or is composed of

A 10 to 50 parts by weight of the at least one film-forming component and/or
B 50 to 90 parts by weight of the at least one epoxide component and/or
C 5 to 250 parts by weight of the blocked amine and/or
D 0.1 to 15 parts by weight of the at least one stabilizer and/or
E 0.1 to 200 parts by weight of the at least one additive,

wherein the parts by weight of components A and B total 100 and wherein the amount of blocked amine used is selected such that there is a 0.95 to 1.5-fold molar amount, and in particular a 0.98 to 1.2-fold molar amount, of amine hydrogens of the released amine per molar amount of the epoxide groups of the epoxide component B, or, if an amine scavenger is present in component D, per molar sum of the epoxide groups of the epoxide component B and the amine scavenger groups of the amine scavenger.

**13.** Adhesive tape according to one of the preceding claims, **characterized in that** the adhesive tape is repositionable in air with 50% relative humidity at 23°C for at least 12 h, and in particular 12 to 24 h.

**14.** Method for assembling two components by means of an adhesive tape according to one of Claims 1 to 13, **characterized in that** the adhesive tape is applied to the first component and then brought into contact with moisture, in particular air having a relative humidity of at least 15%, in order to activate the curing.

## Revendications

**1.** Bande adhésive à adhésivité de contact, contenant ou constituée par une composition durcissant à l'humidité, contenant ou constituée par :

A 5 à 60 parties en poids d'au moins un composant filmogène ;
B 40 à 95 parties en poids d'au moins un composant époxyde ;
C 10 à 500 parties en poids d'au moins un durcisseur activable à l'humidité ;
D éventuellement 0,1 à 15 parties en poids d'au moins un stabilisateur, ainsi que
E éventuellement 0,1 à 200 parties en poids d'au moins un additif,

à chaque fois par rapport à la composition durcissant à l'humidité, la somme des parties en poids des composants A et B étant de 100,
**caractérisée en ce que**
le durcisseur activable à l'humidité C comprend au moins une amine bloquée ou est constitué par celle-ci.

**2.** Bande adhésive selon la revendication 1, **caractérisée en ce que** le composant filmogène A est choisi parmi les élastomères et/ou les thermoplastiques, notamment parmi le caoutchouc de nitrile, le caoutchouc de synthèse, le caoutchouc naturel, les polyuréthanes, les polyacrylates, les polyamides ou des mélanges de ceux-ci, le composant filmogène A ne présentant de préférence pas d'adhésivité de contact intrinsèque.

**3.** Bande adhésive selon la revendication 1 ou 2, **caractérisée en ce que** le composant époxyde B contient au moins 10 % en poids de résines époxyde liquides à 25 °C, par rapport au composant époxyde B.

**4.** Bande adhésive selon l'une quelconque des revendications précédentes, **caractérisée en ce que** l'amine bloquée est telle qu'elle libère une amine en présence d'eau.

**5.** Bande adhésive selon l'une quelconque des revendications précédentes, **caractérisée en ce que** l'amine bloquée est telle qu'elle contient au moins deux atomes d'hydrogène d'amine à l'état débloqué après une réaction complète avec de l'eau.

**6.** Bande adhésive selon l'une quelconque des revendications précédentes, **caractérisée en ce que** l'amine bloquée est choisie dans le groupe comprenant ou constitué par les oxazolidines, les imines, les énamines, les silylamines ou des combinaisons de celles-ci, l'amine bloquée étant notamment une oxazolidine.

**7.** Bande adhésive selon la revendication 6, **caractérisée en ce que** l'amine bloquée contient au moins deux groupes oxazolidine.

**8.** Bande adhésive selon l'une quelconque des revendications précédentes, **caractérisée en ce que** la quantité utilisée d'amine bloquée est choisie de manière à obtenir 0,95 à 1,5 hydrogène d'amine de l'amine libérée pour un groupe époxyde du composant époxyde B.

**9.** Bande adhésive selon l'une quelconque des revendications précédentes, **caractérisée en ce que** le stabilisateur D est choisi parmi les capteurs d'eau, les capteurs d'amines, ainsi que les combinaisons de ceux-ci, le capteur

d'eau comprenant de préférence au moins un composé d'alcoxysilane, notamment un composé d'alcoxysilane qui porte en position alpha un hétéroatome ou un groupe vinyle, et/ou le capteur d'amines étant de préférence choisi dans le groupe des carboxylates de vinyle.

**10.** Bande adhésive selon l'une quelconque des revendications précédentes, **caractérisée en ce que** la quantité utilisée d'amine bloquée est choisie de manière à obtenir, par rapport à la quantité molaire des groupes époxyde du composant époxyde B ou, dans la mesure où un capteur d'amines est ajouté, par rapport à la somme molaire des groupes époxyde du composant époxyde B et des groupes capteurs d'amines du capteur d'amines, 0,95 à 1,5 fois la quantité molaire d'hydrogènes d'amine de l'amine libérée, notamment 0,98 à 1,2 fois la quantité molaire.

**11.** Bande adhésive selon l'une quelconque des revendications précédentes, **caractérisée en ce que** l'additif E comprend au moins un accélérateur, qui est notamment choisi parmi les alcools, les acides bloqués, de préférence les carboxylates de silyle, ainsi que les combinaisons de ceux-ci.

**12.** Bande adhésive selon l'une quelconque des revendications précédentes, **caractérisée en ce que** la composition durcissant à l'humidité contient

A 10 à 50 parties en poids dudit au moins un composant filmogène et/ou
B 50 à 90 parties en poids dudit au moins un composant époxyde et/ou
C 5 à 250 parties en poids de l'amine bloquée et/ou
D 0,1 à 15 parties en poids dudit au moins un stabilisateur et/ou
E 0,1 à 200 parties en poids dudit au moins un additif,

ou en est constituée, la somme des parties en poids des composants A et B étant de 100, et la quantité utilisée d'amine bloquée étant choisie de manière à obtenir, par rapport à la quantité molaire des groupes époxyde du composant époxyde B ou, dans la mesure où un capteur d'amines est ajouté dans le composant D, par rapport à la somme molaire des groupes époxyde du composant époxyde B et des groupes capteurs d'amines du capteur d'amines, 0,95 à 1,5 fois la quantité molaire d'hydrogènes d'amine de l'amine libérée, notamment 0,98 à 1,2 fois la quantité molaire.

**13.** Bande adhésive selon l'une quelconque des revendications précédentes, **caractérisée en ce que** l'aptitude au repositionnement de la bande adhésive dans l'air à 50 % d'humidité relative de l'air et 23 °C est d'au moins 12 heures, notamment 12 à 24 heures.

**14.** Procédé d'assemblage de deux composants au moyen d'une bande adhésive selon l'une quelconque des revendications 1 à 13, **caractérisé en ce que** la bande adhésive est appliquée sur le premier composant et mise en contact avec de l'humidité, notamment de l'air à au moins 15 % d'humidité relative de l'air, pour l'activation du durcissement.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4376844 A
- JP 2014214265 A
- WO 2013174776 A1
- DE 60001779 T2
- EP 0168713 B1
- DE 3820294 C1
- US 4725630 A1
- DE 3316166 C1
- DE 102008027502
- EP 2025507 B1
- WO 2010022154 A2
- US 3117099 A
- US 3018262 A
- WO 2004009720 A2
- US 5304419 A
- EP 2380930 A1
- US 6936131 A
- EP 2597697 A1
- WO 2014001005 A1
- US 6803445 B2


### In der Beschreibung aufgeführte Nicht-Patentliteratur


- **DONATAS SATA.** Handbook of Pressure Sensitive Adhesive Technology. Satas & Associates, 1999
- **R. DITTMEYER et al.** Chemische Technik, Prozesse und Produkte. Wiley-VCH, 2005, vol. 5, 1142
- **DONATAS SATAS.** Handbook of Pressure Sensitive Adhesive Technology. Satas & Associates, 1999
- **J.M.G. COWIE.** Chemie und Physik der synthetischen Polymere. Vieweg
- **B. TIEKE.** Makromolekulare Chemie. VCH, 1997
- *J. Adhesion,* 1991, vol. 34, 189-200
- C. A. Dahlquist: Tack, adhesion, fundamentals and practice. McLaren and Sons Ltd, 1966